# EUROPÄISCHE PATENTSCHRIFT

(11) **EP 0 454 017 B1**
(45) Veröffentlichungstag und Bekanntmachung des Hinweises auf die Patenterteilung: **06.12.1995**
(21) Anmeldenummer: 91106417.8
(22) Anmeldetag: 22.04.1991
(51) Int. Cl.: H01M 10/39, H01M 10/50

(54) **Hochtemperaturspeicherbatterie**
High-temperature accumulator battery
Batterie d'accumulateurs à haute température

(30) Priorität: 26.04.1990 DE 4013269
(43) Veröffentlichungstag der Anmeldung: 30.10.1991
(73) Patentinhaber: ABB PATENT GmbH, 68309 Mannheim (DE)
(72) Erfinder: Mennicke, Stefan, Dr., W-6906 Leimen-Bauangelloch (DE); Andres, Walter, W-6700 Ludwigshafen 23 (DE); Eck, Gismar, Dr., W-7500 Karlsruhe (DE); Flory, Wilfried, W-6835 Brühl (DE); Kowalczyk, Bernhard, W-6902 Sandhausen (DE)
(74) Vertreter: Rupprecht, Klaus, Dipl.-Ing.

(56) Entgegenhaltungen:
- EP-A- 0 065 248
- DE-A- 3 717 266
- GB-A- 2 153 136

## Beschreibung

Die Erfindung bezieht sich auf eine Hochtemperaturspeicherbatterie gemäß dem Oberbegriff des Patentanspruches 1.
Solche Hochtemperaturspeicherbatterien, die aus elektrochemischen Speicherzellen auf der Basis von Alkalimetall und Chalkogen aufgebaut sind, werden in vermehrtem Maße als Energiequelle für Elektrofahrzeuge eingesetzt. Die bis jetzt bekannten Hochtemperaturspeicherbatterien der obengenannten Bauart arbeiten bei einer Temperatur von 350°C. Um Wärmeverluste innerhalb der Ruhepausen der Hochtemperaturspeicherbatterien zu vermeiden, sind diese von einer thermischen Isolierung umgeben. Diese wird durch ein doppelwandiges Gehäuse begrenzt, wobei der Raum zwischen den Wänden evakuiert und mit einem Isoliermaterial ausgefüllt ist. Der Innenraum der Isolierung dient zur Aufnahme der Speicherzellen. Um die Speicherzellen in der gewünschten Position halten zu können, sind Halterungen vorgesehen. Da die Speicherzellen während des Betrieb der Hochtemperaturspeicherbatterie gekühlt werden müssen, andererseits in den Ruhepausen der Batterie ggf. mit Hilfe einer Heizeinrichtung auf einer Mindesttemperatur zu halten sind, müssen die Halterungen so ausgebildet sein, daß jede Speicherzelle die erforderliche Heizung bzw. Kühlung erfährt. Bei den bis jetzt bekannten Halterungen ist es oftmals nicht möglich, die während des Betriebs der Hochtemperaturspeicherbatterie entstehende Wärme abzuführen. Ein anderes Problem ist die gleichmäßige Heizung der Speicherzellen während der Ruhepausen.

Aus der DE-A-37 17 266 ist eine Mehrzellenbatterie bekannt, die aus Lithium- oder Calcium-Thionylchloridzellen oder Lithium-Schwefeldioxidzellen aufgebaut ist. Im Störfall, kann es innerhalb der Batterie zu einer Temperaturerhöhung auf 200°C kommen. Um die hierbei entstehende Wärme von den Zellen abzuleiten, ist zwischen den Zellen ein Füllmaterial angeordnet. Dieses weist einen Schmelzpunkt zwischen 40°C und 150°C auf. Vorzugsweise wird als Füllmaterial ein natürliches oder synthetisches Wachs, Paraffin, Polyethylen, Teer oder ein Gemisch dieser Stoffe verwendet. Bei einer Temperatur oberhalb von 150°C ist das zwischen die Zellen gefüllte Material flüssig.

Der Erfindung liegt die Aufgabe zugrunde, eine Hochtemperaturspeicherbatterie zu schaffen, die eine sichere Halterung der Speicherzellen gewährleistet, und es gleichzeitig ermöglicht, daß jede Speicherzelle in der erforderlichen Weise gekühlt bzw. gewärmt werden kann.

Diese Aufgabe wird erfindungsgemäß durch die Merkmale des Patentanspruches 1 gelöst.

Durch das Einbetten der Speicherzellen in eine Vergußmasse, die nach dem Aushärten die geforderte mechanische Stabilität aufweist, wird eine Halterung für die Speicherzellen geschaffen, die auch unter extremen Bedingungen die Speicherzelle in der gewünschten Position hält. Die gleiche Wirkung zeigt ein grobkörniges Schüttgut, in welches die Speicherzellen eingebettet werden können. Dieses Schüttgut erlaubt eine direkte Kühlung der Speicherzelle. Es ist möglich, ein gasförmiges oder flüssiges Kühlmittel durch die Schüttmasse hindurchzuleiten. Dies geschieht vorzugsweise dort, wo Zwischenräume zwischen benachbarten Speicherzellen ausgebildet sind. Diese Zwischenräume sind ebenfalls mit Schüttgut ausgefüllt. Das Schüttgut bildet für das Kühlmittel, gleichgültig, ob es gasförmig oder flüssig ist, einen gleichgroßen hydraulischen Widerstand. Dadurch wird sichergestellt, daß durch alle Zwischenräume die gleiche Menge an Kühlmittel geleitet und somit eine gleichmäßige Kühlung der Speicherzellen erzielt wird. Zur Kühlung von Speicherzellen, die in eine Vergußmasse eingebettet sind, besteht die Möglichkeit, in den Zwischenräumen zwischen benachbarten Speicherzellen Latentwärmespeicher anzuordnen. Diese sind so ausgebildet, daß sie sich über die gesamte Länge des Zwischenraums erstrecken, und eine Substanz enthalten, deren Schmelzwärme etwas oberhalb der Arbeitstemperatur der Batterie liegt. Die Schmelzwärme dieser Substanzen kann zum Kühlen beispielsweise zur Kompensation der Verlustwärme der Speicherzellen verwendet werden. Die Ausbildung von Hochtemperaturspeicherbatterien mit Speicherzellen, die in Vergußmassen eingebettet sind, begünstigen die Verwendung solcher aufschmelzender Substanzen, da die Vergußmassen die Ausbreitung von Reaktionsprodukten aus defekten Speicherzellen wirkungsvoll einschränken. Damit ist die Gefahr von heftigen Reaktionen zwischen dem Speicherzellenmaterial und den Latentwärmespeichern deutlich reduziert. Gleichzeitig wird der Aufwand für die mechanische Fixierung, welche für die thermische Ankopplung der Latentwärmespeicher an die Speicherzellen notwendig ist, erheblich verringert. Die Gewichtszunahme der Hochtemperaturspeicherbatterie durch Latentwärmespeicher wird durch das Fehlen des Kühlmittels ausgeglichen. Erfindungsgemäß besteht die Möglichkeit, Speicherzellen, die in Vergußmassen eingebettet sind, auch direkt zu kühlen. Hierfür werden Kühlkanäle ausgebildet, welche an die Speicherzellen und an die Zwischenräume zwischen den Speicherzellen angrenzen. Ein solcher Kühlkanal wird beispielsweise durch eine Vertiefung im Gehäuse der Speicherzelle gebildet. Die Vertiefung erstreckt sich über die gesamte Länge der Speicherzelle. Durch eine Wand, die konvex in das Innere des Zwischenraums gewölbt ist, kann jeder Kühlkanal begrenzt werden. Diese konvex gewölbten Wände erstrecken sich ebenfalls über die gesamte Länge der Vertiefung. Eine mechanische Halterung erfahren diese konvex gewölbten Wände durch die Vergußmasse, die den übrigen Bereich der Zwischenräume ausfüllen. Speicherzellen, die in Vergußmassen eingebettet sind, können sowohl mit separat installierten Wärmetauschern als auch mit integrierten Wärmetauschern gekühlt werden. Beim Einsatz von integrierten Wärmetauschern werden Wärmetauscherrohre in die Zwischenräume zwischen benachbarten Speicherzellen angeordnet. Durch diese werden gasförmige oder flüssige Wärmeträger geleitet. Erfindungsgemäß besteht die Möglichkeit, diese Wärmetauscherrohre durch Kanäle zu bilden, die unmittelbar von der Vergußmasse begrenzt werden. Die Wärmetauscherrohre bzw. diese Kanäle in den Zwischenräumen werden an Sammel- und Verteilerräume angeschlossen, von denen aus die Wärmeträger durch die Rohre bzw. Kanäle geleitet werden. Die Verteilung der Wärmeträger kann mittels hydraulischer Widerstände gesteuert werden. Ein integriertes Kühlsystem mit integrierten Wärmetauscher vereinigt wesentliche Vorteile der direkten und indirekten Kühlung. Auf der einen Seite ist das Kühlsystem selbst geschlossen. Ein direkter Kontakt zwischen dem Wärmeträger und der Speicherzelle wird vermieden. Andererseits wird von der Speicherzelle abgegeben Wärme über die gesamte Länge der Speicherzelle abgeführt, was die vertikalen Temperaturgradienten der Speicherzellen vermindert. Die Wärmetauscher können an allen Begrenzungsflächen des Speicherzellenblocks bzw. der Zellmatrix, wie er auch genannt wird, angeordnet werden. Die Zellmatrix kann auch in mehrere Teile aufgespalten werden, um Wärmetauscher zwischen diesen Teilen anzuordnen. Es ist jedoch besonders vorteilhaft, die Wärmetauscher über und unter der Zellmatrix zu installieren, da praktisch nur so alle Speicherzellen den gleichen Abstand zum Wärmetauscher haben. Nur hiermit kann eine ebene Temperaturverteilung in der Zellmatrix erreicht werden . Erfindungsgemäß kann die Batterie so ausgebildet werden, daß die innere Wand der Isolierung, welche die Batterie begrenzt, gleichzeitig die äußere Begrenzungswand des Wärmetauschers bildet. Der Boden oder die Deckfläche der Zellmatrix, welche dieser Begrenzungswand gegenüber liegt, kann dann die innere Begrenzungswand des Wärmetauschers bilden. Um das vertikale Temperaturprofil in dem Speicherzellenblock und dessen thermische Ankopplung an den bzw. die Wärmetauscher zu verbessern, können Stäbe aus einem gut die Wärme leitenden Material in die Vergußmasse eingebettet werden. Die Stäbe verlaufen parallel zu den Speicherzellen, sind ebenso lang wie diese und sind zusätzlich direkt mit dem Wärmetauscher verbunden. Es ist möglich, Hochtemperaturspeicherbatterien, die für eine besonders hoher Dauerleistung ausgelegt sind, mit einem kombinierten System aus integrierter Kühlung mit separatem Wärmetauscher und integrierten Latentwärmespeichern auszurüsten. Das Aufheizen und das Aufrechterhalten der Ruhetemperatur der Hochtemperaturspeicherbatterien ist in allen Fällen über elektrisch betriebene Heizelemente möglich. Diese Heizelemente können in die Wärmetauscher integriert werden.

Die Erfindung wird nachfolgend anhand von schematischen Zeichnungen näher erläutert. Es zeigen:
- Fig. 1: den Teilbereich eines Speicherzellenblocks, der in einer Hochtemperaturspeicherbatterie angeordnet ist,
- Fig. 2: Speicherzellen, zwischen denen Latentwärmespeicher angeordnet sind,
- Fig. 3: Speicherzellen, die in grobkörniges Schüttgut eingebettet sind,
- Fig. 4: Kanäle für die Durchleitung des Kühlmitteles zwischen benachbart angeordneten Speicherzellen,
- Fig. 5: Sammel- und Verteilereinrichtungen für das Kühlmittel innerhalb einer Hochtemperaturspeicherbatterie und
- Fig. 6: einen Ausschnitt aus einer Hochtemperaturspeicherbatterie mit eingebauten Wärmetauschern.

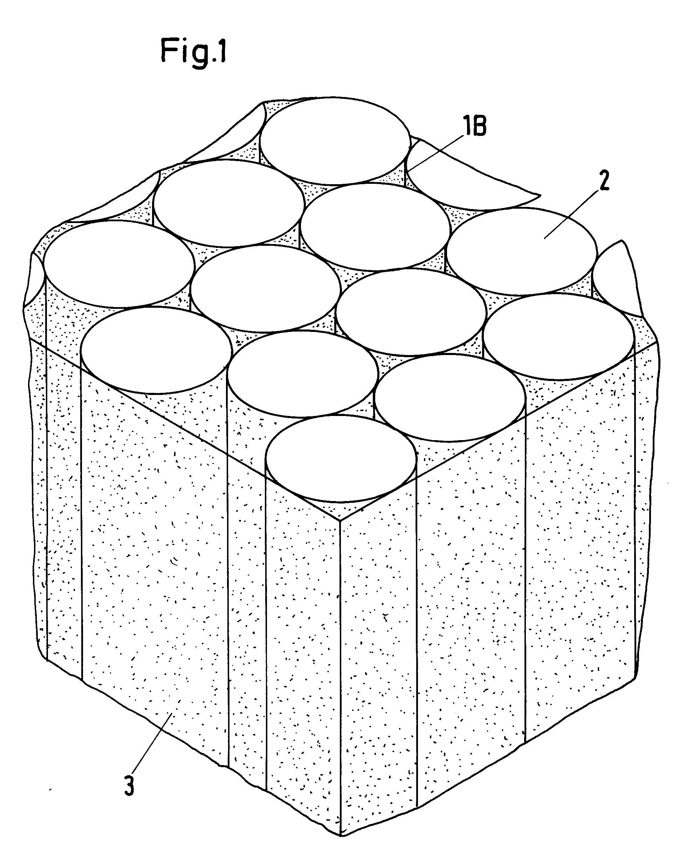

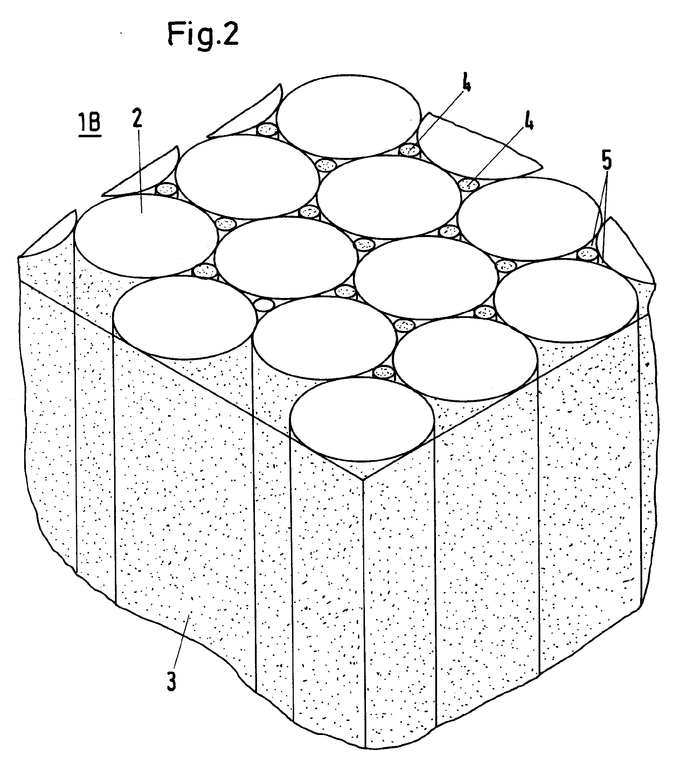

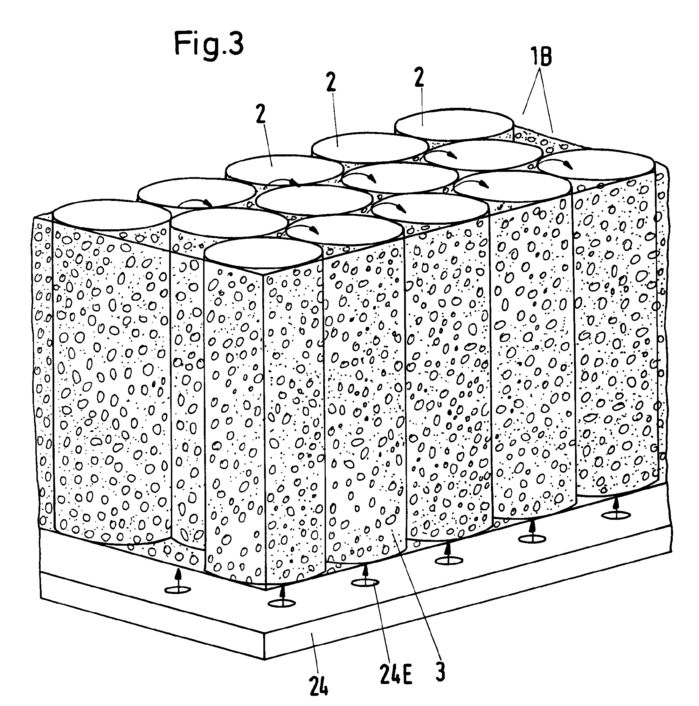

In Fig. 1 ist der Teilbereich eines Speicherzellenblocks 1B, auch Zellmatrix genannt, dargestellt, wie er innerhalb einer Hochtemperaturspeicherbatterie 1 angeordnet ist. Die Speicherzellen 2 sind schematisch dargestellt, und in eine ausgehärtete Vergußmasse 3 eingebettet. Die Vergußmasse wird erfindungsgemäß aus einer Mischung gebildet, die ein duroplastisches Harz und ein oder mehrerere Füllermaterialien umfaßt. Die mechanische Stabilität der Vergußmasse 3 ist so groß, daß die Speicherzellen 2 auch unter extremen Bedingungen in der gewünschten Position gehalten werden, und nicht aus dem Speicherzellenverband ausbrechen können. Wie eingangs bereits erläutert, müssen die Speicherzellen 2 einer jeden Hochtemperaturspeicherbatterie 1 während des Betriebs der Hochtemperaturspeicherbatterie 1 gekühlt werden. Handelt es sich bei der Hochtemperautspeicherbatterie um eine solche, die mit geringer Dauerleistung betrieben wird, so können erfingungsgemäß Latentwärmespeicher zur Kühlung verwendet werden. Wie anhand von Fig. 2 zu sehen ist, wird in jedem Zwischenraum 5, der zwischen jeweils 3 benachbarten Speicherzellen 2 verbleibt, ein Latentwärmespeicher 4 angeordnet. Dieser wird durch ein zylinderförmiges Gehäuse begrenzt, das an den Enden verschlossen ist. Die Länge der zylinderförmigen Gehäuse ist an die Länge der Speicherzellen 2 angepasst. Die Latentwärmespeicher 4 sind in den Zwischenräumen 5 mittig angeordnet und ebenfalls in die Vergußmasse 3 eingebettet. Die Latentwärmespeicher 4 sind vorzugsweise mit einem Material gefüllt (hier nicht dargestellt), dessen Schmelztemperatur etwas oberhalb der Arbeitstemperatur der Speicherzellen 2 liegt. Beispielsweise sind die Latentwärmespeicher 4 mit einer eutektischen LiCl/KCl Mischung gefüllt. Die Wärme, die zum Schmelzen dieses Materials erforderlich ist, wird den Speicherzellen 2 entzogen, wodurch diese gekühlt werden, bzw. deren Verlustwärme kompensiert wird. Fig. 3 zeigt wie ein Speicherzellenblock 1B in einer Hochtemperaturspeicherbatterie fixiert werden kann. Zunächtst werden die Speicherzellen 2 in einem Batteriekasten (hier nicht dargetellt) angeordnet und ein grobkörniges Schüttgut 3 eingebettet. Dieses besteht aus Quarzsand oder Aluminiumoxid. Die Korngröße des Schüttgutes 3 beträgt 0,5-2 mm. Verbleibende Hohlräume werden ebenfalls mit dem Schüttgut gefüllt. Zur Kühlung der Speicherzellen 2 wird ein Kühlmedium, das gasförmig oder flüssig ist, durch das Schüttgut 3 hindurch an den Speicherzellen 2 vorbeigeleitet. Wie Fig. 3 zeigt, kann das Kühlmedium über eine Verteilerplatte 24 dem Speicherzellenblock 1B zugeführt werden. Die Verteilerplatte 24 ist mit Öffnungen 24E versehen. Die Größe der Öffnungen 24E und ihre Verteilung auf der Verteilerplatte 24 wird durch die Menge des Kühlmittels bestimmt, die einer jeden Speicherzelle 2 zuzuführen ist, um eine ausreichende Kühlung derselben zu erreichen. Da das Schüttgut 3 grobkörnig ist, kann das Kühlmedium problemlos hindurchgeleitet werden. Durch eine gleichmäßige Körnung des Schüttgutes 3 wird überall ein gleichmäßiger hydraulischer Widerstand für das Kühlmedium ausggebildet, so daß hierdurch eine gleichmäßige Verteilung desselben auf alle Speicherzellen 2 erreicht wird.

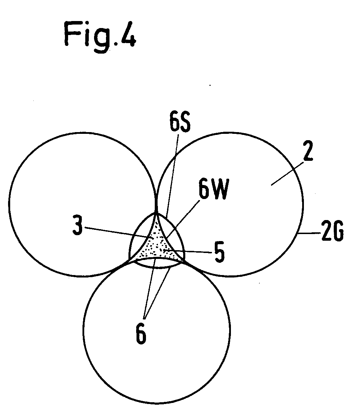

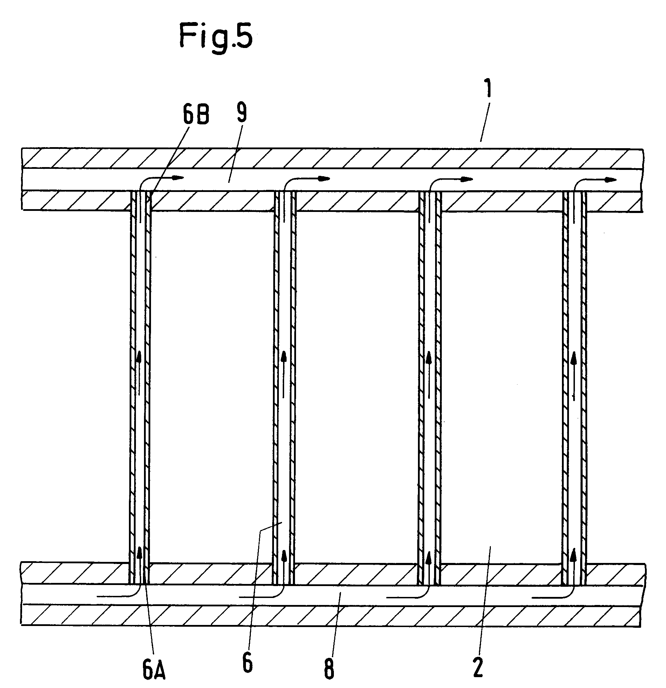

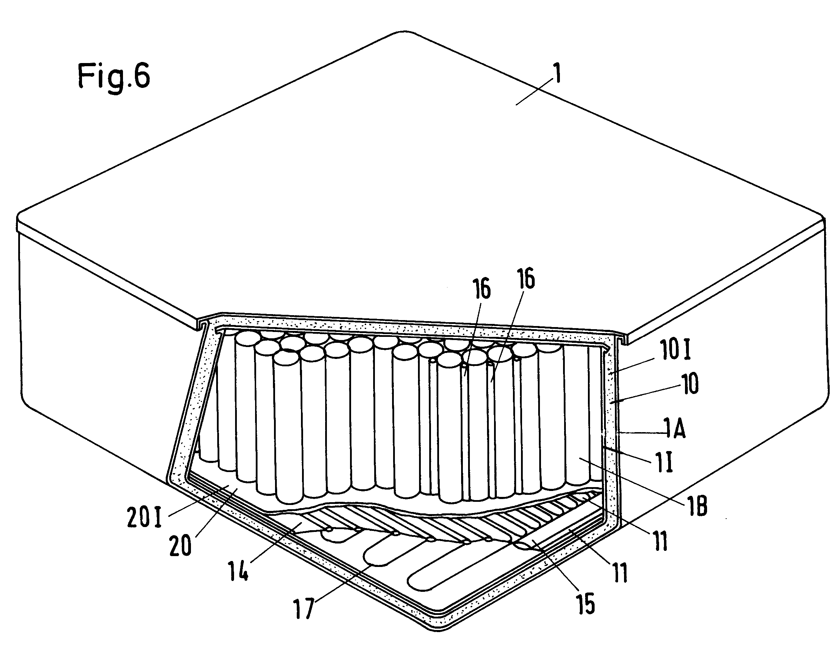

Wird die Hochtemperaturspeicherbatterie 1 mit hoher Dauerleistung betrieben, so ist die Kühlung ihrer Speicherzellen 2 an diese Tatsache anzupassen. Dies bedeutet, daß eine intensivere Kühlung der Speicherzellen 2 erforderlich ist. Da Latentwärmespeicher und das direkte Durchleiten des Kühlmediums durch das Schüttgut für eine intensive Kühlung nicht geeignet sind, werden hierfür Kühlkanäle 6 ausgebildet, die unmittelbar an die Speicherzellen 2 angrenzen. Eine Ausführungsform dieser Kühlkanäle 6 zeigt Fig. 4. Die Speicherzellen 2 sind in gleicher Weise in das Schüttgut 3 bzw. die Vergußmasse 3 eingebettet, wie in den Figuren 1 und 3 dargestellt. Die Kühlkanäle 6 sind im Bereich der Zwischenräume 5 angeordnet, die zwischen jeweils 3 benachbarten Speicherzellen 2 entstehen. Zur Ausbildung dieser Kühlkanäle 6 weist jede Speicherzelle 2 in ihrem Gehäuse 2G eine schalenförmige Vertiefung 6S auf. Diese erstreckt sich über die gesamte Länge der Speicherzelle 2. Um eine zweite Begrenzung eines jeden Kühlkanals 6 bewirken, ist eine konvex gewölbte Wand 6W vor jeder schalenförmigen Vertiefung 6S angeordnet. Diese Wand 6W erstreckt sich ebenfalls über die gesamte Länge der Speicherzelle 2. Durch das Ausfüllen des Zwischenraumes 5 mit Schüttgut 3 bzw. der Vergußmasse 3 wird bewirkt, daß die Wände 6W in der gewünschten Position gehalten werden. Hiermit wird ein Abschluß der Kühlkanäle 6 zum übrigen Zwischenraum 5 hin gewährleistet. Die Verteilung des Kühlmittels erfolgt über Sammmel- und Verteilerräume wie sie in Fig. 5 dargestellt sind. An der Unterseite des Speicherzellenblocks 1B ist wenigstens ein Verteilerraum 8 angeordnet, mit dem die Kühlkanäle 6 in Verbindung stehen. In ihn wird das Kühlmittel von außen eingeleitet und über die Kühlkanäle 6 an den Speicherzellen 2 vorbeigeführt. Über dem Speicherzellenblock 1B befindet sich ein Sammelraum 9, der das aus den Kanälen 6 ausströmende Kühlmittel aufnimmt. Von dem Sammelraum 9 wird das Kühlmittel wieder aus der Hochtemperaturspeicherbatterie 1 nach außen geleitet. Fig. 6 zeigt eine Hochtemperaturspeicherbatterie 1, innerhalb derer ein Speicherzellenblock 1B angeordnet ist. Die Kühlung der Speicherzellen 2 erfolgt über einen oder mehrere Wärmetauscher 11. Bei dem hier dargestellten Ausführungsbeispiel ist nur ein Wärmetauscher 11 vorgesehen. Dieser ist auf der Unterseite des Speicherzellenblocks 1B angeordnet. Falls es die Gegebenheiten erfordern, kann auch ein wieterer Wärmetauscher (hier nicht dargestellt) über dem Speicherzellenblock 1B angeordnet werden. Weitere Wärmetauscher können, falls notwendig, an den seitlichen Begrenzungsflächen des Speicherzellenblocks 1B angeordnet werden. Die Hochtemperaturspeicherbatterie gemäß Fig. 6 wird von einem äußeren und einem inneren Gehäuseteil 1A,1I begrenzt. Die Abmessungen des inneren Gehäuseteils 1I sind kleiner gewählt, so daß zwischen den beiden Gehäuseteilen 1A und 1I ein Raum 10 entsteht, der evakuiert ist, und mit Isoliermaterial 10I ausgefüllt ist. Zur Kühlung der Speicherzellen 2 bzw. bzw. des Speicherzellenblocks 1B ist ein Wärmetauscher 11 vorgesehen, der mit dem Boden des Speicherzellenblocks 1B bzw. den Speicherzellen 2 in wärmeleitendem Kontakt stehen. Bei dem hier dargestellten Ausführungsbeispiel ist der innere Gehäuseteil 1I im Bereich seines Bodens doppelwandig ausgebildet. Zwischen diesem doppelten Boden 20 ist der Wärmetauscher 11 angeordnet. Falls die Speicherzellen 2 des Speicherzellenblocks 1B in eine Vergußmasse eingebettet sind, besteht die Möglichkeit, daß der Wärmetauscher 11 unmittelbar an die Unterseite dieses Speicherzellenblocks 1B angrenzt. Der Wärmetauscher 11 wird durch Beutel 14 gebildet,die durch Metallfolien gebildet werden. Diese sind so ausgebildet, daß sie von einem Kühlmedium durchströmt werden können. Wie in Figur 6 dargestellt, sind an den Metallfolien Zuleitungen 15 für das Kühlmittel befestigt. Wird das Kühlmittel (hier nicht dargestellt) durch die Beutel 14 gepumpt, so legen sich die Beutel 14 fest an die Unterseite des Speicherzellenblocks 1B an. Hierdurch wird ein enger wärmeleitender Kontakt zwischen den Speicherzellen 2 und dem Wärmetauscher 11 erzielt. Erfindungsgemäß kann die innere Begrenzungsfläche 20I des inneren Gehäuseteils 1I auch als Lochblech ausgebildet werden (hier nicht dargestellt). Werden die Beutel 14 (wie oben beschrieben) von dem Kühlmedium durchströmt, so werden sie gegen das Lochblech gepreßt. es wird hierbei ebenfalls ein enger wärmeleitender Kontakt zwischen dem Wärmetauscher 11 und dem Speicherzellenblock bzw. den einzelnen Speicherzellen 2 ausgebildet. Erfindungsgemäß können solche Wärmetauscher 11 auch über den Speicherzellenblock 1B (hier nicht dargestellt) in entsprechender Weise installiert werden. Die hier beschriebene Ausführungsform der Wärmetauscher 11 und die Ausbildung eines engen Kontakts der Wärmetauscher mit den Speicherzellen 2 ist nicht auf diese Ausführungsformen beschränkt. Vielmehr umfaßt sie alle Möglichkeiten, mit den ein enger Kontakt zwischen Wärmetauschern und Speicherzellen erreicht wird.

Um das vertikale Temperaturprofil in dem Speicherzellenblock 1B und die thermische Ankopplung der Wärmetauscher an die Speicherzellen 1B zu verbessern, werden Stäbe 16 aus einem gut leitenden Material, vorzugsweise aus Kupfer, in die Vergußmasse eingebettet. Diese Stäbe 16 stehen in direktem Kontakt mit den Wärmetauschern bzw. dem Wärmetauscher 11.

Erfindungsgemäß besteht die Möglichkeit, die Hochtemperaturspeicherbatterien, welche für eine besonders hohe Dauerleistung vorgesehen sind, mit einem kombinierten System, bestehend aus indirekter Kühlung, einem oder mehreren separaten Wärmetauschern und zusätzlichen zwischen den Speicherzellen angeordneten Latentwärmespeichern auszurüsten. Um sicherzustellen, daß in den Ruhepausen der Hochtemperaturspeicherbatteren die erforderliche Mindesttemperatur erhaltenbleibt, können beispielsweise in den bzw. die Wärmetauscher 11, wie in Fig. 6 dargestellt, Heizelemente 17 integriert werden, die dann für die erforderliche Wärmezufuhr sorgen.

## Patentansprüche

1. Hochtemperaturspeicherbatterie mit einer thermischen Isolierung (10), die von einem inneren und einem äußeren Gehäuseteil (1A, 1I) begrenzt ist, wobei im Innenraum (1R) miteinander verschaltete Speicherzellen (2) angeordnet sind, für die mindestens eine Heiz- und eine Kühleinrichtung (4, 6, 11, 17) angeordnet ist, dadurch gekennzeichnet, daß die Speicherzellen (2) zur Halterung in einer ausgehärteten Vergußmasse (3) oder einem Schüttgut (3) eingebettet und zur Kühlung und Heizung der Speicherzellen (2) direkte oder indirekte Kühleinrichtungen (4, 6, 11) sowie Heizelemente (17) innerhalb der thermischen Isolierung (10) angeordnet sind.

2. Hochtemperaturspeicherbatterie nach Anspruch 1, dadurch gekennzeichnet, daß zur Kühlung der Speicherzellen (2) in jedem Zwischenraum (5) zwischen benachbarten Speicherzellen (2) wenigstens ein Latentwärmespeicher (4) angeordnet ist.

3. Hochtemperaturspeicherbatterie nach Anspruch 1, dadurch gekennzeichnet, daß zur Kühlung der Speicherzellen (2) die in ein grobkörniges Schüttgut (3) eingebettet sind, ein flüssiges oder gasförmiges Kühlmittel durch die ebenfalls mit Schüttgut (3) ausgefüllten Zwischenräume (5) zwischen den Speicherzellen (2) geleitet ist.

4. Hochtemperaturspeicherbatterie nach Anspruch 1, dadurch gekennzeichnet, daß zur Kühlung von Speicherzellen (2), die in eine Vergußmasse (3) eingebettet sind, Kühlkanäle (6) vorgesehen sind, die in den Randbereich einer jeden Speicherzelle (2) integriert sind.

5. Hochtemperaturspeicherbatterie nach Anspruch 4, dadurch gekennzeichnet, daß die Kühlkanäle (6) durch schalenförmige Vertiefungen (6S) im Gehäuse (2G) einer jeden Speicherzelle (2) gebildet sind, daß sich die schalenförmigen Vertiefungen (6S) über die gesamte Länge einer jeder Speicherzelle (2) erstrecken und nach außen zum Zwischenraum (5) hin durch eine konvex gewölbte Wand (6W) begrenzt sind, und daß die Wände (6W) durch das in den Zwischenraum (5) eingefüllte Schüttgut (3) bzw. die Vergußmasse (3) in der gewünschten Position gehalten sind.

6. Hochtemperaturspeicherbatterie nach Anspruch 5, dadurch gekennzeichnet, daß zur Ausbildung der Kühlkanäle (6) innerhalb eines jeden Zwischenraums (5) durchgehende Bohrungen in der Vergußmasse (3) vorgesehen sind, die sich über die gesamte Länge des Zwischenraums (5) erstrecken.

7. Hochtemperaturspeicherbatterie nach einem der Ansprüche 5 oder 6, dadurch gekennzeichnet, daß die Kühlkanäle (6) an ihrem ersten Ende (6A) an wenigstens einen Verteilerraum (8) und an ihrem zweiten Ende (6B) an einen Sammelraum (9) für das Kühlmittel angeschlossen sind.

8. Hochtemperaturspeicherbatterie nach Anspruch 1, dadurch gekennzeichnet, daß zur Kühlung der Speicherzellen (2) ein oder mehrere Wärmetauscher (11) vorgesehen sind, die mit den Speicherzellen (2) in einem direkt wärmeleitenden Kontakt stehen.

9. Hochtemperaturspeicherbatterie nach Anspruch 8, dadurch gekennzeichnet, daß der Boden und/oder der Deckel einer jeden Speicherzelle (2) mit einem oder mehreren Wärmetauschern (11) in einem direkten wärmeleitenden Kontakt stehen.

10. Hochtemperaturspeicherbatterie nach Anspruch 8 oder 9, dadurch gekennzeichnet, daß jeder Wärmetauscher (11) unmittelbar an die zu einem Speicherzellenblock (1B) zugefaßten Speicherzellen (2) angrenzt.

11. Hochtemperaturspeicherbatterie nach einem der Ansprüche 8 bis 10, dadurch gekennzeichnet, daß der Boden und/oder die Deckfläche eines jeden inneren Gehäuses (1I) doppelwandig ausgebildet und der Wärmetauscher(11) dazwischen angeordnet ist.

12. Hochtemperaturspeicherbatterie nach Anspruch 11, dadurch gekennzeichnet, daß die innerste Wand (20I) des Gehäuses (1I) als Lochblech ausgebildet ist.

13. Hochtemperaturspeicherbatterie nach einem der Ansprüche 8 bis 12, dadurch gekennzeichnet, daß jeder Wärmetauscher (11) als Beutel (14) aus Metallfolien ausgebildet, von einem Kühlmittel durchströmt und hierdurch wärmeleitend gegen die angrenzenden Flächen gepreßt ist.

14. Hochtemperaturspeicherbatterie nach einem der Ansprüche 8 bis 13, dadurch gekennzeichnet, daß zur Ausbildung eines vertikalen Temperaturprofils zwischen den Speicherzellen (2) eines Speicherzellenblocks (1B) Stäbe (16) aus einem gut wärmeleitenden Material angeordnet sind, die sich über die gesamte Länge der Speicherzellen (2) erstrecken und mit wenigstens einem Wärmetauscher (11) in Verbindung stehen.

15. Hochtemperaturspeicherbatterie nach einem der Ansprüche 8 bi 15, dadurch gekennzeichnet, daß Heizelemente (17) zum Ausgleich von Wärmeverlusten in jeden Wärmetauscher (11) integriert sind.

## Claims

1. High-temperature storage battery having a thermal insulation (10) which is bounded by an inner and an outer casing part (1A, 11), there being arranged in the inner space (1R) interconnected storage cells (2), for which at least one heating device and one cooling device (4, 6, 11, 17) is [sic] arranged, characterised in that the storage cells (2) are embedded, for retention, in a set sealing compound (3) or a loose material (3) and, for cooling and heating the storage cells (2), direct or indirect cooling devices (4, 6, 11) as well as heating elements (17) are arranged within the thermal insulation (10).

2. High-temperature storage battery according to Claim 1, characterised in that, to cool the storage cells (2), at least one latent heat accumulator (4) is arranged in each intermediate space (5) between neighbouring storage cells (2).

3. High-temperature storage battery according to Claim 1, characterised in that, to cool the storage cells (2) which are embedded in a coarse-grained loose material (3), a liquid or gaseous coolant is led through the intermediate spaces (5) between the storage cells (2), likewise filled with loose material (3).

4. High-temperature storage battery according to Claim 1, characterised in that, to cool storage cells (2) which are embedded in a sealing compound (3), cooling channels (6) which are integrated in the edge region of each storage cell (2) are provided.

5. High-temperature storage battery according to Claim 4, characterised in that the cooling channels (6) are formed by dish-shaped depressions (6S) in the casing (2G) of each storage cell (2), in that the dish-shaped depressions (6S) extend over the entire length of each storage cell (2) and are bounded on the outside towards the intermediate space (5) by a convexly curved wall (6W), and in that the walls (6W) are held in the desired position by the loose material (3) or the sealing compound (3) filled into the intermediate space (5).

6. High-temperature storage battery according to Claim 5, characterised in that, to form the cooling channels (6) within each intermediate space (5), through-bores in the sealing compound (3) which extend over the entire length of the intermediate space (5) are provided.

7. High-temperature storage battery according to one of Claims 5 or 6, characterised in that the cooling channels (6) are connected at their first end (6A) to at least one distributing space (8) and at their second end (6B) to a collecting space (9) for the coolant.

8. High-temperature storage battery according to Claim 1, characterised in that, to cool the storage cells (2), one or more heat exchangers (11) which are in a directly heat-conducting contact with the storage cells (2) are provided.

9. High-temperature storage battery according to Claim 8, characterised in that the bottom and/or the cover of each storage cell (2) are in a direct heat-conducting contact with one or more heat exchangers (11).

10. High-temperature storage battery according to Claim 8 or 9, characterised in that each heat exchanger (11) is directly adjacent to the storage cells (2) held together to form a storage cell block (1B).

11. High-temperature storage battery according to one of Claims 8 to 10, characterised in that the bottom and/or the cover surface of each inner casing (1I) is of a double-walled design and the heat exchanger (11) is arranged in between.

12. High-temperature storage battery according to Claim 11, characterised in that the innermost wall (20I) of the casing (1I) is designed as a perforated plate.

13. High-temperature storage battery according to one of Claims 8 to 12, characterised in that each heat exchanger (11) is designed as bags (14) of metal foils through which coolant flows and which are thereby pressed against the adjacent surfaces in a heat-conducting manner.

14. High-temperature storage battery according to one of Claims 8 to 13, characterised in that, to form a vertical temperature profile, rods (16) of a material conducting heat well are arranged between the storage cells (2) of a storage cell block (1B), which rods extend over the entire length of the storage cells (2) and are in connection with at least one heat exchanger (11).

15. High-temperature storage battery according to one of Claims 8 bi [sic] 15, characterised in that heating elements (17) are integrated in each heat exchanger (11) to compensate for heat losses.

## Revendications

1. Batterie d'accumulateurs à haute température comprenant une isolation thermique (10) délimitée par une partie de boîtier intérieure (1A) et une partie de boîtier extérieure (1I), et des éléments accumulateurs (2) interconnectés qui sont disposés dans l'espace intérieur (1R), et pour lesquels sont prévus au moins un dispositif de chauffage et un dispositif de refroidissement (4, 6, 11, 17), caractérisée par le fait qu'en vue de leur maintien, les éléments accumulateurs (2) sont noyés dans une masse de scellement (3) durcie ou une matière granulaire en vrac (3) et qu'en vue du refroidissement et chauffage des éléments. accumulateurs (2), des dispositifs (4, 6, 11) de refroidissement direct ou indirect ainsi que des éléments chauffants (17) sont disposés à l'intérieur de l'isolation thermique (10).

2. Batterie d'accumulateurs à haute température suivant la revendication 1, caractérisée par le fait qu'en vue du refroidissement des éléments accumulateurs (2), au moins un accumulateur de chaleur latente (4) est disposé dans chaque espace intermédiaire (5) entre des éléments accumulateurs (2) voisins.

3. Batterie d'accumulateurs à haute température suivant la revendication 1, caractérisée par le fait qu'en vue du refroidissement des éléments accumulateurs (2) noyés dans une matière granuleuse en vrac (3) à gros grains, un fluide réfrigérant liquide ou gazeux est conduit à travers les espaces intermédiaires (5), également remplis de matière granulaire en vrac (3), entre les éléments accumulateurs (2).

4. Batterie d'accumulateurs à haute température suivant la revendication 1, caractérisée par le fait qu'en vue du refroidissement des éléments accumulateurs (2) qui sont noyés dans une masse de scellement (3), il est prévu des canaux de refroidissement (6) intégrés dans la zone marginale de chacun des éléments accumulateurs (2).

5. Batterie d'accumulateurs à haute température suivant la revendication 4, caractérisée par le fait que les canaux de refroidissement (6) sont constitués par des creux (6S) en forme de coquille dans le boîtier (2G) de chaque élément accumulateur (2), que les creux (6S) en forme de coquille s'étendent sur toute la longueur de chaque élément accumulateur (2) et sont délimités vers l'extérieur, par rapport à l'espace intermédiaire (5), par une paroi (6W) bombée de façon convexe, et que les parois (6W) sont maintenues en position par la matière granulaire en vrac (3) introduite dans l'espace intermédiaire (5), ou par la masse de scellement.

6. Batterie d'accumulateurs à haute température suivant la revendication 5, caractérisée par le fait qu'en vue de la formation de canaux de refroidissement (6) à l'intérieur de chaque espace intermédiaire (5), il est prévu, dans la masse de scellement (3), des trous de passage qui s'étendent sur toute la longueur de l'espace intermédiaire (5).

7. Batterie d'accumulateurs à haute température suivant l'une des revendications 5 ou 6, caractérisée par le fait que les canaux de refroidissement sont reliés à leur première extrémité (6A) à au moins un compartiment distributeur (8) et à leur deuxième extrémité (6B) à un compartiment collecteur (9) pour le fluide réfrigérant.

8. Batterie d'accumulateurs à haute température suivant la revendication 1, caractérisée par le fait que pour le refroidissement des éléments accumulateurs (2), il est prévu un ou plusieurs échangeurs de chaleur (11) se trouvant en contact direct de conduction de chaleur avec les éléments accumulateurs (2).

9. Batterie d'accumulateurs à haute température suivant la revendication 8, caractérisée par le fait que le fond et/ou le dessus de chaque élément accumulateur (2) se trouvent en contact direct de conduction de chaleur avec un ou plusieurs échangeurs de chaleur (11).

10. Batterie d'accumulateurs à haute température suivant la revendication 8 ou 9, caractérisée par le fait que chaque échangeur de chaleur (11) est directement contigu aux éléments accumulateurs (2) réunis en un bloc d'éléments accumulateurs (1B).

11. Batterie d'accumulateurs à haute température suivant l'une des revendications 8 à 10, caractérisée par le fait que le fond et/ou le dessus de chaque boîtier intérieur (1I) est à double paroi et l'échangeur de chaleur (11) est disposé entre cette double paroi.

12. Batterie d'accumulateurs à haute température suivant la revendication 11, caractérisée par le fait que la paroi intérieure (20I) du boîtier (1I) est réalisée sous la forme d'une tôle perforée.

13. Batterie d'accumulateurs à haute température suivant l'une des revendications 8 à 12, caractérisée par le fait que chaque échangeur de chaleur (11) est réalisé sous la forme d'un sac ou sachet (14) en feuilles métalliques, est traversé par un fluide réfrigérant et est ainsi appliqué avec conduction de chaleur contre les surfaces contiguës.

14. Batterie d'accumulateurs à haute température suivant l'une des revendications 8 à 13, caractérisée par le fait qu'en vue de l'établissement d'un profil de température vertical, des barreaux (16) en un matériau bon conducteur de la chaleur sont disposés entre les éléments accumulateurs (2) d'un bloc d'éléments accumulateurs (1B), ces barreaux s'étendant sur toute la longueur des éléments accumulateurs (2) et étant en liaison avec au moins un échangeur de chaleur (11).

15. Batterie d'accumulateurs à haute température suivant l'une des revendications 8 à 14, caractérisée par le fait que des éléments chauffants (17) sont intégrés à chaque échangeur de chaleur (11) en vue de la compensation de pertes thermiques.
